# EUROPEAN PATENT SPECIFICATION

(11) **EP 1 103 737 B1**
(45) Date of publication and mention of the grant of the patent: **02.06.2004**
(21) Application number: 00125602.3
(22) Date of filing: 22.11.2000
(51) Int. Cl.: F16D 13/75

(54) **Clutch control device**
Kupplungssteuerung
Dispositif de commande d'embrayage

(30) Priority: 24.11.1999 JP 33304599
(43) Date of publication of application: 30.05.2001
(73) Proprietor: AISIN SEIKI KABUSHIKI KAISHA, Kariya City Aichi Pref. (JP)
(72) Inventor: Naito, Takao, Nagoya-shi, Aichi-ken (JP); Terakawa, Tomomitsu, Anjo-shi, Aichi-ken (JP); Maki, Naoyuki, Kariya-shi, Aichi-ken (JP)
(74) Representative: Leson, Thomas Johannes Alois, Dipl.-Ing.

(56) References cited:
- DE-A- 19 810 033
- DE-A- 19 834 961
- GB-A- 2 124 321
- US-A- 5 119 913
- US-A- 5 325 949

## Description

The present invention is directed to a clutch according to the preamble of claim 1.

Generally speaking, in clutch control devices of the kind, the position or attitude of a diaphragm spring changes together with the unavoidable friction wear of a clutch facing (clutch disc), which increases the force required for disengaging the clutch or for establishing a disengaged state of the clutch. That is, the load applied to a clutch cover is increased. Thus, in view of such circumstances, one of the conventional clutch control devices which is disclosed in Japanese Patent Laid-open Publication Hei.5(1993)-215150 is designed to compensate the change of clutch characteristics resulting from the clutch facing wear in such a manner that the attitude or position of the diaphragm spring is corrected by adjusting the fulcrum height thereof depending on the load applied ,upon clutch operation, to the clutch cover (the load applied to the sensor diaphragm secured to the clutch cover).

However, in the foregoing conventional or prior art clutch control device, the clutch cover resonates with the vibration which occurs while the vehicle is running, which varies the load applied to the clutch cover. Thus, a problem is arisen that compensating the wear of the clutch facing (clutch disc) with excellent precision becomes impossible.

DE-A-198 34 961 discloses a generic clutch comprising a pressure plate, a spring and a clutch control device which moves a clutch disc by way of the pressure plate and the spring so as to engage with and disengage from a wheel opposed thereto and rotating together with an output shaft of a driving source, in order to adjust an engagement relationship between the wheel and the clutch disc, the clutch control device comprising an actuator providing a force to the spring which serves for adjusting the engagement relationship; an adjusting member; and a controller for controlling the actuator such that only when a condition is satisfied the adjusting member makes an adjustment of the distance between the spring and the pressure plate.

It is the object of the present invention to provide clutch comprising a pressure plate, a spring and a clutch control for performing an accurate clutch operation.

This object is solved by a clutch having the features of claim 1. The invention is further developed as it is defined in the dependent claims.

In accordance with the first aspect of the present invention, due to the fact that the distance between the spring and the pressure plate is capable of being changed only when the condition is satisfied, for example, the condition is set to establish a driving condition under which the clutch resonance fails to occur, which makes it possible to compensate the wear of the clutch disc with excellent precision.

Preferably, thus constructed clutch control device is desired, as a second aspect of the present invention says, to further comprise means for measuring a wear amount of the clutch disc for regarding that exceeding wear amount of the clutch disc above a predetermined value as the satisfaction of the condition.

In accordance the second aspect of the present invention, the adjustment can be made only when necessary or when the wear becomes larger than the predetermined value which makes it possible to lower the possibility of unexpected adjustment by doing unnecessary adjustment frequently.

The above and other objects, features and advantages of the present invention will be more apparent and more readily appreciated from the following detailed description of a preferred exemplary embodiment of the present invention, taken in connection with the accompanying drawings, in which;
FIG.1 illustrates a diagram of a system in which is employed a control device in accordance with the present invention;
FIG.2 illustrates a cross-sectional view of the control device which is illustrated in FIG.1;
FIG. 3 illustrates a front view of the control device which is illustrated in FIG.1;
FIGs.4 (A), 4(B), 4( C), and 5 illustrate operations of the control device which is illustrated in FIG.1;
FIGs.6 and 7 illustrate flowcharts of programs which are executed by a CPU which is illustrated in FIG.1;
FIGs.8 (A), 8(B), and 8(C) illustrate the principle as to how the wear amount is measured;
FIG.9 illustrates cross-sectional view of a clutch control device in accordance with another embodiment of the present invention;
FIG.10 illustrates a front view of the clutch control device which is illustrated in FIG.9;
FIG.11 illustrates a side view of an adjusting member employed in the clutch control device which is illustrated in FIG. 9;
FIG.12 illustrates a perspective view of a pressure plate of the clutch control device which is illustrated in FIG.9;
FIG.13 illustrates an enlarged view of a neighboring portion of the adjusting member of the clutch control device which is illustrated in FIG.9;
FIG.14 illustrates a view when the pressure plate and the adjusting member of the clutch control device are assembled;
FIG.15 illustrates a flowchart of a program which are executed by a CPU in accordance of another embodiment; and
FIGs.16 (A), 16(B), 16(C), and 16(D) illustrates how the clutch control device operates which is illustrated in FIG. 9.

### DETAILED DESCRIPTION OF THE PRESENT INVENTION

### [FIRST EMBODIMENT]

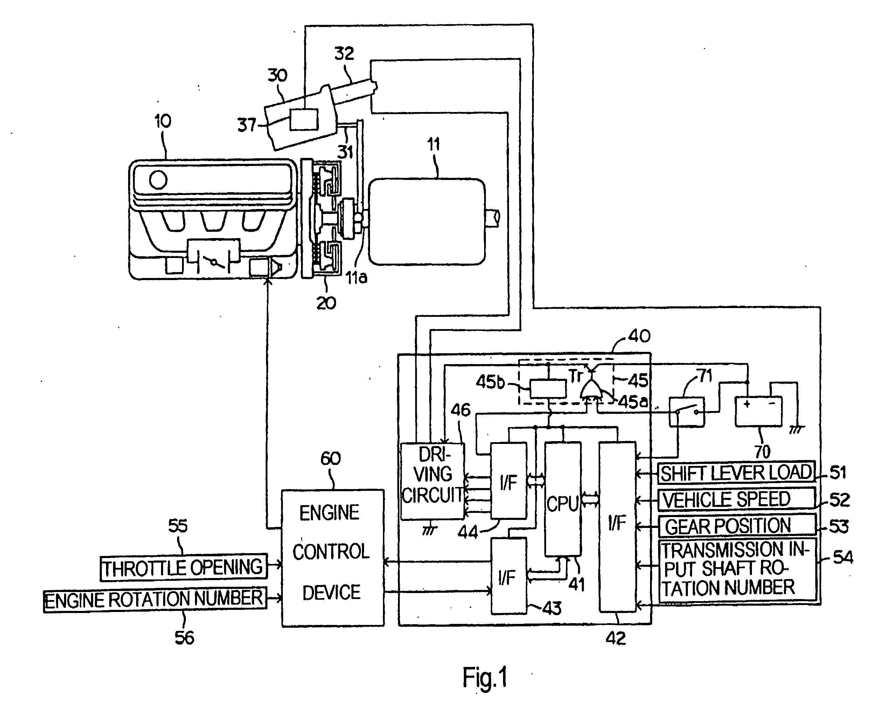

Hereinafter, a first embodiment of the present invention will be explained in detail with referenced to FIGs.1 to 8 inclusive. A clutch control device in accordance with the instant embodiment which is illustrated or depicted in FIG.1 is used for controlling a friction clutch 20 which is disposed between an engine 10 as a driving source and a transmission 11. The clutch control device includes an actuator 30 to operate the friction clutch 20 and a clutch control circuit 40 as a controller from which a drive command signal is issued to the actuator 30.

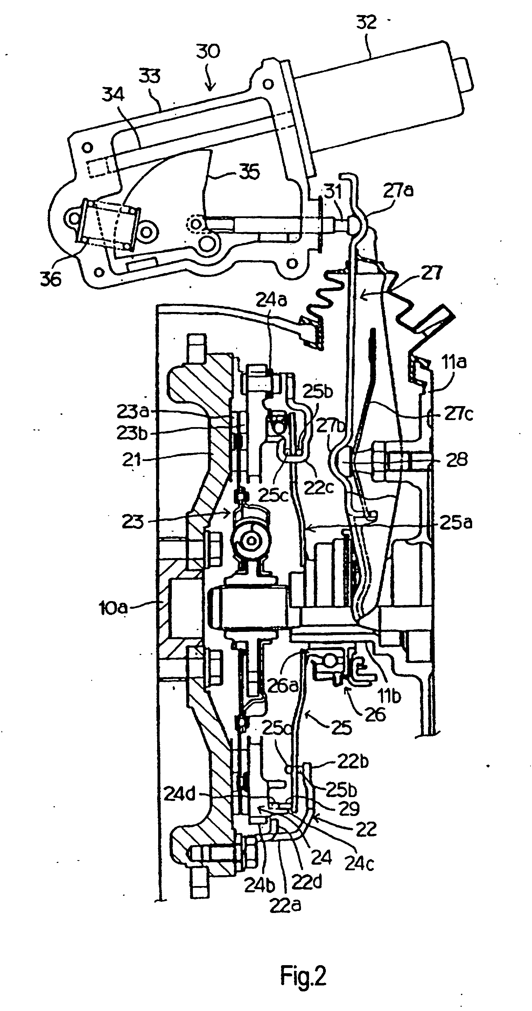

As can be easily seen from FIG. 2 which depicts in detail the cross-sectional structure of the friction clutch 20, the friction clutch 20 includes, as its major parts, a flywheel 21, a clutch cover 22, a clutch disc 23, a pressure plate 24, a diaphragm spring 25, a release bearing 26, a release fork 27, a pivot support member 28 secured to a case 11a of the transmission 11, and an adjuster wedge member 29. Due to the fact the pressure plate 24, the diaphragm spring 25, the release fork 27 and so on are assembled into the clutch cover 22, the combination of such elements is sometimes said to be a clutch cover assembly.

The flywheel 21 is in the form of a disc which is formed of cast iron and is fixed to a crankshaft (not shown) as an output shaft of the driving source by means of a bolt (not shown) so as to be rotated together with the crankshaft.

The clutch cover 22, which is of a substantial cylindrical configuration, has a cylinder portion 22a, a flange portion 22b formed inside the cylinder portion 22a, a plurality of equally-spaced holding portions 22c which are formed in circumferentially extending fashion at an inner periphery of the cylinder portion 22a, and a pressure plate stopper portion 22d which is in the form of an inward bent portion extending from the cylinder portion 22a. The clutch cover 22 is secured at its outer periphery to the flywheel 21 by means of a plurality of bolts so as to be rotatable together with the flywheel 21.

The clutch disc 23, which serves for transmitting a force outputted from the engine 10 to the transmission 11, is disposed between the flywheel 21 and the pressure plate 24 and is movable in the axial direction of the input shaft of the transmission 11 due to the fact that the center portion of the clutch disc 23 is splined on the input shaft of the transmission 11. On opposite sides of an outer periphery of the clutch disc 23, there are secured clutch facings 23a and 23b, respectively, in rivet fixing mode.

The pressure plate 24 is urged to the clutch disc 23 toward the flywheel 21 by the diaphragm spring 25 for bringing the clutch disc 23 into unitary rotation with the flywheel such that the clutch disc 23 is sandwiched between the pressure plate 24 and the flywheel 21. A strap 24a of the pressure plate 24 is connected to the clutch cover 22 so that the pressure plate 24 and the clutch cover 22 rotate concurrently.

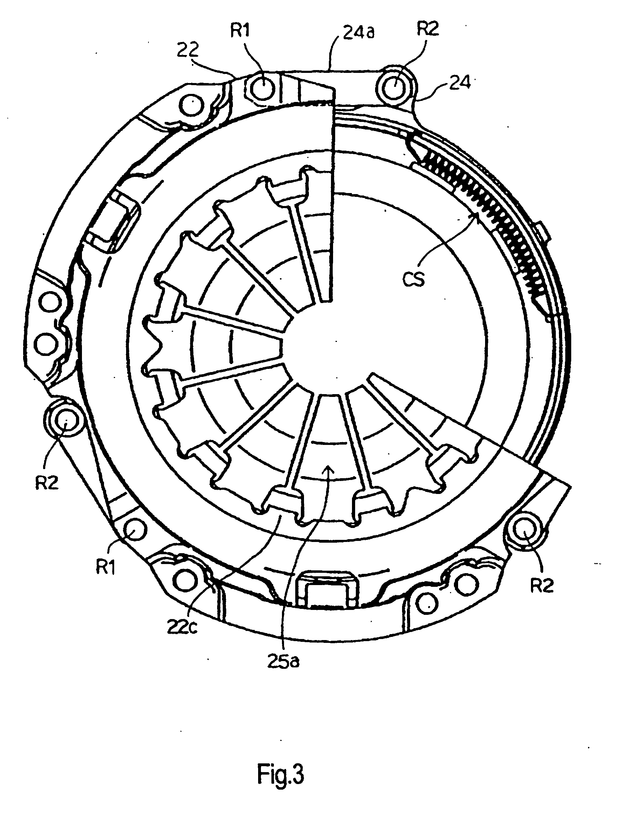

The strap 24a is in the form of a plurality of layered thin leaf springs. As can be seen from FIG.3, one end of the strap 24a is fixed to the outer periphery of the clutch cover 22 by rivets R1, while the other end of the strap 23 is fixed to a projection formed at the outer periphery of the pressure plate 24 by rivets R2. Thus, the strap 24a provides an axial direction force so as to be movable away from the flywheel 21.

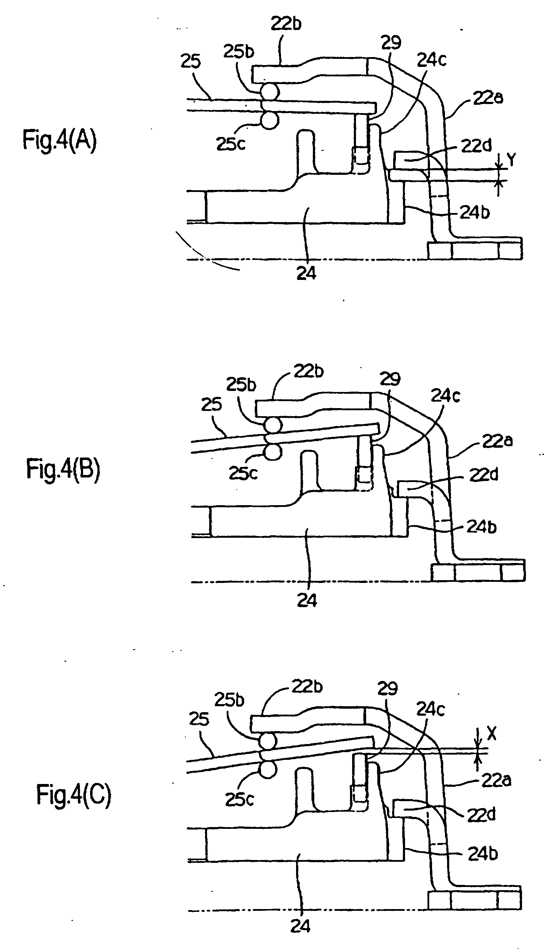

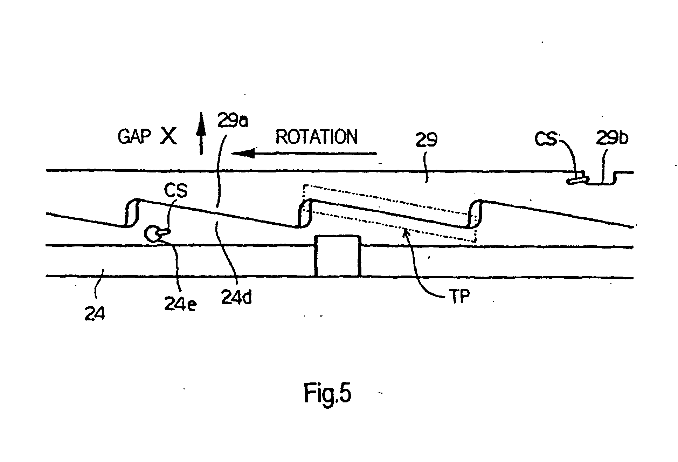

As illustrated in FIGs. 2 and 4, at the outermost periphery of the pressure plate 24, there is formed an engaging portion 24b with which the pressure plate stopper portion 22d of the clutch cover 22 is brought into engagement when the pressure plate 24 moves though a predetermined distance toward the diaphragm spring 25. At an inner peripheral side of engaging portion 24b, a guide 24c is formed which projects toward the diaphragm spring 25. As can be seen from FIG. 5, a taper portion 24d is formed which extends toward the diaphragm spring 25.

As also can be seen from FIG. 3, the diaphragm spring 25 is made up of twelve elastic leaf springs as lever members 25a which are arranged ,in radial fashion, in the inner periphery of the cylinder portion 22a of the clutch cover 22. Each of the lever members 25a is held between a pair of axially spaced ring-shaped rubber-made members 25b and 25c. The ring member 25b is in abutment with the holding portion 22c of the clutch cover 22. Thus, each of the lever members 25a becomes being capable of doing pivotal movement whose fulcrum is each of the ring members 25b and 25c.

The adjust wedge member 29 is disposed as a part of an adjusting member between the taper portion 24d of the pressure plate 24 and the outer periphery of the diaphragm spring 25. The adjust wedge member 29 is formed into a ring-shaped structure and has, as shown in FIG.5, a wedge side taper portion 29a is in point-symmetry with the taper portion 24d and is in engagement therewith in taper-surface to taper-surface contact at TP. The upper side (FIG. 5) of the adjust wedge member 29 is flattened. The adjust wedge member 29 constitutes a force transmission path between the pressure plate 24 and the diaphragm spring 25 and transmits forces applied to and generated in the respective diaphragm spring 25 to the pressure plate 24.

At a suitable portion of the adjust wedge member 29 which is oriented to the diaphragm spring 25, there is formed notch 29b. At a suitable portion of the taper portion 24d, there is formed a through hole 24e. Both ends of a tension spring CS are engaged with the notch 29b and the through hole 24e, respectively. Thus, the pressure plate 24 and adjust wedge member 29 are urged to generate a relative rotation therebetween which is made in a direction along which each top of the taper portion 24d approaches the corresponding top of the wedge side taper portion 29a.

The release bearing 26 is supported by a sleeve 11b in slidable fashion which is so supported by the transmission case 11a as to surround the input shaft of the transmission 11 and has a point 26a for urging the inner end of the lever member 25a (i.e. the center portion of the diaphragm spring 25) toward the flywheel 21.

The release fork 27 as a fork member is used for sliding the release bearing 26 in the axial direction depending on the operation of the actuator 30. One end of the release fork 27 is in abutment with the release bearing 26, while the other end as an abutment portion 27a is in abutment with a distal end of a rod 31 of the actuator 30. The release fork 27 is also assembled with the pivot support member 28 by a spring 27c fixed to the transmission case 11a, which makes it possible to establish a pivotal movement of the release fork 27 whose fulcrum is the pivot support member 28 received in a substantial center portion 27b.

As previously mentioned, the actuator 30 is used for moving the rod 31 substantially axial direction. The actuator 30 has a DC motor 32 and a housing 33 supporting the DC motor 32 and fixed to a suitable portion of a vehicle body (not shown). In the housing 33, there are accommodated a shaft 34, a sector gear 35, and an assist spring 36. The shaft 34 is driven by the DC motor 32 to rotate. The sector gear 35 is of a sector-shape configuration when seen from side and is pivoted to the housing 33.

The shaft 34 is in worm meshing engagement with an arc-shaped profile of the sector gear 35. A proximate portion of the rod 31 (the opposite end of the distal end which is in abutment with the release fork 27) is supported rotatably with the sector gear 35. Thus, when the DC motor 32 is turned on, the sector gear 35 is rotated, thereby moving the rod 31 relative to the housing 33 in axial direction.

The assist spring 36 is being compressed within the range of the pivotal movement of the sector gear 35. One end of the assist spring 36 is held at a rear side of the housing 33, while the other end of the assist spring 36 is held at the sector gear 35. Thus, when the sector gear 35 rotates through a predetermined angle in the clockwise direction in FIG. 2, the assist spring 36 begins to urge the sector gear 35 in the clockwise direction, which moves the rod 31 in the right direction, thereby assisting the rightward movement of the rod 31 which results from the operation of the DC motor 32.

Referring now back to FIG.1, the clutch control circuit 40 is made up of a microcomputer (CPU 41), interfaces 42, 43, and 44, a power supply circuit 45, a driving circuit 46, and other related elements. The CPU 41 includes built-in ROMs and RAMs for storing programs and maps as will be detailed later.

The interface 42 is connected by way of a bus to the CPU 11. The CPU 41 is also connected to a shift lever load sensor 51, a vehicle speed sensor 52 as a means for measuring the vehicle speed, a gear position sensor 53, a transmission input shaft rotation number sensor 54, and a stroke sensor 37. The shift lever load sensor 51 detects a shift lever load which is generated upon transmission shift lever operation. The vehicle speed sensor 52 detects the vehicle speed. The gear position sensor 53 detects an actual gear shift change. The transmission input shaft rotation number sensor 54 detects the rotation number of the input shaft 11a of the transmission 11. The stroke sensor 37 detects a stroke ST of the rod 31 by measuring the swung angle of the sector gear 35 secured to the actuator 30. The interface 42 serves for feeding signals from the sensors 51, 52, 53, 54, and 37 to the CPU 41.

The interface 43 is connected by way of a bus to the CPU 41. The interface 43 is also connected to an engine control device 60 in bi-directional or two-way communicable mode. Thus, the CPU 41 of the clutch control circuit 40 becomes capable of being fed with information from a throttle opening sensor 55 and information from an engine rotation number sensor 56 as a means for measuring the number of the output shaft of the engine 10 both of which are inputted to the engine control device 60.

The interface 44 is connected by way of a bus to the CPU 41. The interface 44 is also connected to both one end of an OR circuit 45a of the power supply circuit 45 and the driving circuit 46. Thus, commands from the CPU 41 are fed to the OR circuit 45a and the driving circuit 46.

The power supply circuit 45 includes the OR circuit 45a, a power transistor Tr whose base is connected to an output terminal of the OR circuit 45a, and a constant voltage circuit 45b. Collector and emitter of the power transistor Tr are connected to a plus terminal of an on-vehicle battery 70 and both the constant voltage circuit 45b and the driving circuit 46. Thus, when the power transistor Tr is tuned on, electricity is applied to the foregoing circuits. The constant voltage circuit 45b adjusts the battery voltage to a constant voltage of 5 volts and the resultant voltage is applied to the CPU 41 and the interfaces 42, 43, and 44. The other input terminal 45a of the OR circuit 45a is connected with one end of an ignition switch 71 which is tuned on and off by a driver.

The other end of the ignition switch 71 is connected to the plus terminal of the battery 70. One end of the ignition switch 71 is also connected to the interface 42, which results in that the CPU 41 is capable of detecting the current condition of the ignition switch 71.

The driving circuit 46 houses therein four switching elements (not shown) each of which is turned on and off depending on a signal which comes from the interface 44. These four switching elements constitute a well-known bridge circuit each of which is brought into a conductive condition selectively for a time period of time, thereby applying an arbitrary amount of current to the DC motor 32 for driving the same in one or the other direction.

The engine control device 60, which includes a microcomputer (not shown) as its principal element, controls the engine 10 in its fuel injection amount, ignition timing and so on. As previously explained, the engine control device 60 is connected with the sensors such as the throttle opening sensor 55 which detects throttle opening TA of the engine 10 and the engine rotation number sensor 56 which detects the rotation number NE of the engine 10. The engine control device 60 manipulates signals which come from the respective sensors for controlling the engine 10.

In the clutch control device having thus constructed structure, instead of conventional driver's clutch pedal operation, the actuator 30 operates automatically clutch engaging/disengaging operations. In detail, the automatic clutch engaging/disengaging operation is made when the CPU 41 detects, for example, (1) that the vehicle is in transfer from its running condition to stop condition (i.e. the transmission input shaft rotation number becomes less than a predetermined value), (2) that the load detected by the shift lever load sensor 51 becomes equal to or more than a predetermined value (i.e. the driver's gear shift desire is confirmed), or (3) an acceleration pedal is depressed while the vehicle is being at rest.

In operation, first of all, on the basis of the signal from the clutch control circuit 40, the driving circuit 46 applies an amount of current to the DC motor 32 for turning the same on, which causes the sector gear 35 to rotate in the counterclockwise direction in FIG.2, thereby moving the rod 31 in the leftward direction.

On the other hand, the release bearing 26 is applied with a force, in the rightward direction in FIG.2, from the diaphragm spring 25 such that the release bearing 26 is moved away from the flywheel 21. Due to the fact that this force is transmitted, by way of the release bearing 26, to the release fork 27, the release fork 27 is applied with the force to rotate about the pivot support member 28 in the counterclockwise direction in FIG.2. Thus, moving the rod 31 in the leftward direction in FIG. 2 causes the release fork 27 and the center portion of the diaphragm spring 25 to move away from the flywheel 21, respectively.

At this time, the diaphragm spring 25 is rotated about the ring members 25b and 25c i.e. or the diaphragm spring 25 changes its position, which causes the adjust wedge member 29 which is in engagement with the outer periphery of the diaphragm spring 25 to move toward the flywheel 21. As a result, the pressure plate 24 receives at its taper portion 24d a force in the direction of the flywheel 21, which results in that the clutch disc 23 is held between the pressure plate 24 and the flywheel 21. Thus, the clutch disc 23 is brought into engagement with the flywheel 21, which causes the clutch disc 23 to rotate together with the flywheel 21, thereby transmitting the engine output rotation to the transmission 11.

Next, an explanation will be made in case where the engine output rotation is not transmitted to the transmission when the clutch is disengaged. First of all, the sector gear 35 is rotated in the clockwise direction in FIG.2 by turning the DC motor 32 on. Thus, the rod 31 is moved in the rightward direction in FIG.2, thereby applying a force to the abutment portion 27a of the release fork 27. Then, the release fork 27 is brought into clockwise rotation in FIG.2 about the pivot support member 28, thereby moving the release bearing 26 toward the flywheel 21.

Thus, at the portion 26a, the diaphragm spring 25 is urged in the direction of the flywheel 21 to rotate (i.e. changes its position) about the ring members 25b and 25c. Then, the outer periphery of the diaphragm spring 25 moves away from the flywheel 21, which reduces the force which is applied by way of the adjust wedge member 29 to the pressure plate 24 toward the flywheel 21. On the other hand, due to the fact that pressure plate 24 is urged continually to move away from the flywheel 21 by the strap 24a which results from the engagement between the strap 24a and the clutch cover 24, the pressure plate 24 moves slightly away from the clutch disc 23. Thus, the clutch disc 23 becomes free condition, resulting in a condition under which the engine output rotation is not transmitted to the transmission 11.

If the clutch is disengaged when the vehicle is in normal driving, as illustrated in FIG.4(A), the stroke of the rod 31 is regulated to a predetermined value STO which fixes the distance between the abutting portion 24b of the pressure plate 24 and the pressure plate stopper portion 22d of the clutch cover 22 to a set value Y in order to prevent a contact therebetween.

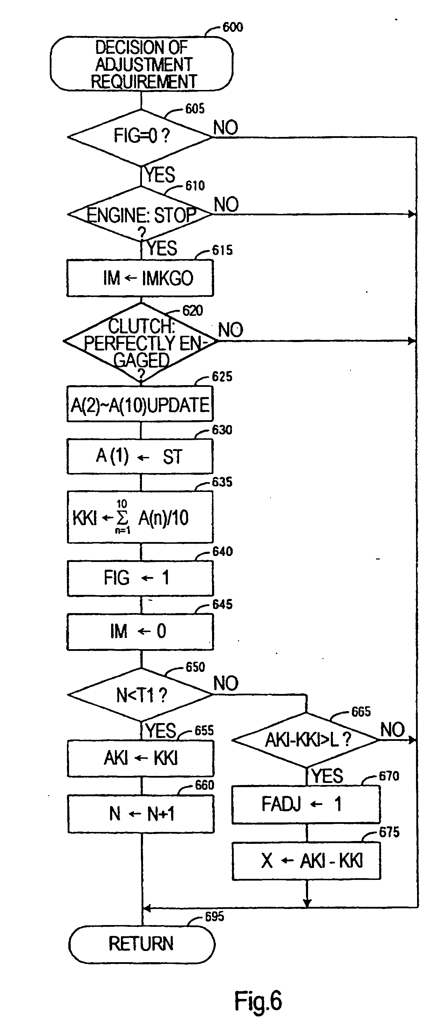

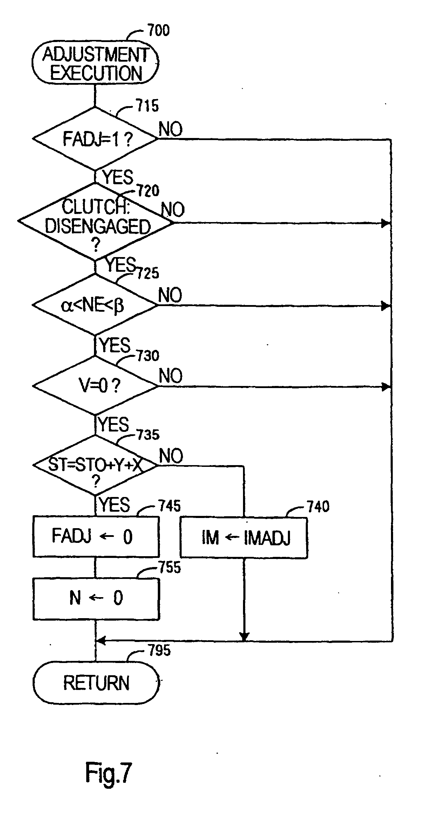

Next, a compensating operation when the clutch facings 23a and 23b wear with reference to flowcharts depicted in FIGs.6 and 7.

First of all, an explanation is made in case where no progress of wear is found in each of the clutch facings 23a and 23b which results from newly performance of wear compensating operation of the clutch disc 23 or the shipping of the clutch from factory, or newly replacement of the clutch disc 23. The CPU 41 continues to execute a routine for decision of adjustment requirement shown in FIG. 6, in repeating fashion, every time a predetermined time duration elapses so long as the CPU 44 is applies with electricity. Thus, the CPU 41 begins the program with step 600 and at step 605 it is checked whether or not a flag FIG is '0'. The flag FIG is set to be '0' by an initial routine executed by the CPU 41 when the ignition switch 71 is switched from turned-off condition to turned-on condition. The flag FIG is set to be '1' if contents of buffers A(N) are updated where N is an integer which ranges from 1 to 10 inclusive which will be detailed later.

Thus, if the contents of the buffers A(1) - A(10) are not updated after the ignition switch 71 is switched from turned-off condition to turned-on condition, the value of the FIG becomes '0', which causes the CPU 41 to indicate that the result of step 605 is 'YES'. The, the program goes to step 610. Conversely, if at least one of the contents of the buffers A(1) - A(10) is updated, the value of the FIG becomes '1', which causes the CPU 41 to indicate that the result of step 605 is 'NO'. Then, the program goes to step 695 for its temporal termination.

The CPU 41 checks at step 610 whether or not the engine 10 stops. In detail, when the detected rotation number NE of the engine 10 is found to be '0' or when a sufficient time duration required for stopping the engine 10 is found to be elapsed from the ignition switch 71 becomes turned-off condition, the CPU 41 determines that the engine 10 stops and the program goes to step 615. Conversely, the engine 10 is found not to be stopped, the program goes to step 695 for its temporal termination.

At step 615, the CPU 41 sets a current IM to be flown through the DC motor 32 to a full or perfect engagement current value IMKGO for reaching a fully engaged condition of the clutch 20 under which the clutch disc 23 is in full engagement with the flywheel 21 to rotate therewith concurrently. Thus, the DC motor 32 is rotated, which causes the rod 31 to move in the leftward direction in FIG.2, resulting in that the clutch disc 23 is brought into engagement with the flywheel 21 in gradually.

Next, at step 620, it is checked whether or not the clutch 20 is in its full engaging condition. In detail, the CPU 41 determined of the fully engaging condition of the clutch 20 when an elapse of sufficient time is found after updating the current value IM of the DC motor 42 or when the stroke ST detected by the stroke sensor 37 is found to be unchanged over a predetermined time duration. If the clutch 20 has not attained it fully engaging condition, the CPU 41 indicates that the result of step 620 is 'NO'. Then, the program goes to step 695 for its temporal termination.

Thereafter, whenever the time duration elapses, steps 605, 610, and 620 are executed repeatedly. Thus, if the condition under which the value of FIG is '0' and the engine 10 stops continues for a time duration for which forming the engaging condition of the clutch 20 is required, the CPU 41 indicates that the result of step 620 is 'YES' and the program goes to step 625. It is to be noted that before the result of step 620 is decided to be 'YES' if the engine 10 is brought into running condition, depending the resulting condition, a suitable amount of current is applied to the DC motor 32 for controlling the clutch 20 in suitable fashion.

If the CPU 41 executes step 625 after establishment of the full engaging condition of the clutch 20, the values of the buffers A(2) - A(10) are updated by replacing the value of the buffer A(n+1) with the value of the buffer A(n) where n is a positive integer which ranges from 1 to 9 inclusive. The value of the buffer A(10) before updating is deleted.

At step 630, the CPU 41 stores the current stroke ST detected by the stroke sensor 37 into the buffer A(1).

Then, the CPU 41, at step 635, calculates an average value of the values of the ten buffers A(1) to A(10) inclusive and the resultant value defined as a fully engaging position KKI. Next, the CPU 41, at step 640, changes the value of the flag FLG into '1' and sets the motor current IM to 0 to stop the DC motor 32.

At step 650, it is checked whether or not the value of a counter N is equal to or less than a set value T1 ( T1 = 10 in the present embodiment). As will be detailed later, the number of the counter N is set to be '0' when newly establishment of wear compensating operation of the clutch disc 23, the shipping of the clutch from factory, or newly replacement of the clutch disc 23. At this stage, one of theses three cases is satisfied and thus the value of the counter N is '0', the CPU 41 indicates that the result of step 650 is 'YES'. Then, at step 655, the CPU 41 set the adjust reference position AKI to the fully engaging position KKI calculated at step 635. At step 660, the CPU 41 increases the value of the counter N by '1' and the program goes to step 695 for its temporal termination.

Thereafter, the CPU 41 executes this routine whenever the time duration elapses. On the other hand, so long as the ignition switch 71 is not switched from off condition to on condition, the value of the flag FIG is maintained at '1'. Thus, the CPU 41 indicates that the result of step 605 is 'NO' and the program goes to step 695, resulting in that the values of the adjust reference position AKI and the fully engaging position KKI are not updated.

Thereafter, if the ignition switch 71 is switched from on condition to off condition and subsequently is switched from off condition to on condition, the value of the flag FIG is changed to '0'. Thus, the CPU 41 indicates that the result of step 605 is 'YES' and the program goes to step 610 at which the foregoing execution is made. And if engine stop condition , clutch fully engaging condition, and other conditions are satisfied, at step 655, the adjust reference position AKI is updated and the number of the counter N is updated N+1.

Repeating the aforementioned procedures, each of the buffer A(n) where n is a positive integer which ranges from 1 to 10 inclusive is updated and the adjust reference position AKI is also updated. In addition, the value of the counter N is increasing. Thus, at a later driving after execution of step 660 at which the value of the counter N is set to be T1 (=10), if step 650 is executed again, the CPU 41 indicates that the result of step 650 is 'NO' and at step 665 checks whether or not the difference (or the absolute value thereof is available) between the adjust reference position AKI and the fully engaging position KKI is equal to or larger than a predetermined threshold value L. At this time, due to the fact that the wear of each of the clutch facings 23a and 23b does not progress, the difference between the adjust reference position AKI and the fully engaging position KKI is smaller than the threshold value L. Thus, the CPU 41 indicates that the results of step 665 is 'NO' and the program goes to step 695 for its temporal termination.

Thereafter, executing steps 610 to 635 inclusive updates the fully engaging position KKI in accordance with wear degree of each of the clutch facings 23a and 23b. On the other hand, due to the fact that the value of the counter N is maintained at a value which is larger than the predetermined value T1, the CPU 41 indicates that the result of step 650 is 'NO' and the program goes to step 665 for executing step 665 and subsequent steps. Thus, step 665 fail to be executed and therefore adjust reference position AKI is maintained at the value which appears when newly establishment of wear compensating operation of the clutch disc 23, the shipping of the clutch from factory, or newly replacement of the clutch disc 23.

If the clutch facings 23a and 23b wear as result of a long-distance driving of the vehicle, the difference between the adjust reference position AKI and the fully engaging position KKI becomes larger than the threshold value L. Thus, the CPU 41 indicates that the result of step 665 is 'YES' and the program goes to step 670. At step 670, the CPU 41 sets the value of the adjust operation request flag FADJ to '1' which indicates that an adjust operation is to be performed.

Then, at step 675, the CPU 41 regards the difference between the adjust reference position AKI and the fully engaging position KKI as a wear amount of each of the clutch facings 23a and 23b and the program goes to step 695 for its temporal termination. As apparent from the above, when the wear of each of the clutch facings 23a and 23b progresses to an extent, value of the adjust operation request flag FADJ is set to be '1'.

In the foregoing explanation, the reason why the fully engaging position KKI and so on are updated only when the engine 10 stops is that no vibrations are transmitted to the clutch 20 from the engine 10 while the engine 10 stops and the fully engaging position KKI and so on can be determined with excellent precision. For precious determination of the fully engaging position KKI and so on, the fully engaging position is determined by calculating the average value of ten time measured strokes each of which is measured whenever fully engaging position is established by using the buffers A(1) to A(10) inclusive.

Next an actual adjust operation will be explained with reference to FIG.7. First of all, it is assumed that all the conditions for initiating the adjust operation are satisfied. The CPU 41 executes the routine or program illustrated in FIG.7 every time a predetermined time duration elapses. Thus, the CPU 41, at a suitable timing, initiate the program with step 700. Next, at step 715, the CPU 41 checks whether or not the value of the aforementioned adjust operation request flag FADJ is '1'. This step is required for operating the adjust operation only when it is requested.

According to the foregoing assumption, the value of adjust operation request flag FADJ is '1', which causes the CPU 41 to indicate that the result of step 715 is 'YES'. At step 720, the CPU 41 checks whether or not the clutch disc 23 is disengaged. This is due to that the adjust operation does not operate when the clutch 20 is engaged depending on the driving condition.

According to the foregoing assumption, the clutch disc 23 is disengaged, which causes the CPU 41 to indicate that the result of step 720 is 'YES'. At step 725, the CPU 41 checks whether or not the engine rotation number NE is equal to or larger than a lower speed side rotation number α (e.g. 400 rpm : minimum requirement for engine operation) and is equal to or smaller than a higher speed side rotation number β (e.g. 2000 rpm : at this value the vibration of the engine 10 begins to increase.).

The purpose of executing step 725 is to prevent an unexpected adjustment by operating the adjust operation when the engine vibration is little which causes the clutch 20 not to resonate therewith. In addition, the reason why doing the adjust operation only when the engine rotation number NE is equal to or larger than the lower speed side rotation number α is that doing the adjust operation to disengage the clutch disc 23 is not preferable when so-called 'gear parking' wherein parking the vehicle is made while a specific transmission gear is being in engagement and detecting the engine rotation number NE ≧ α is impossible when so-called 'gear parking'.

According to the foregoing assumption, α ≦ the engine rotation number NE ≦ β causes the CPU 41 to indicate that the result of step 725 is 'YES' and checks at step 730 whether the vehicle speed V is '0' or not in order to avoid unexpected or erroneous adjustment which results from the vibrations while the vehicle is running. According to the foregoing assumption, the vehicle is at rest, which results in that the vehicle speed V is 0'. Thus, the CPU 41 indicates that the result of step 730 is 'YES' and the program goes to step 735. The foregoing steps 715 to 730 inclusive are executed for checking whether or not the initiation requirements for the adjust operation are satisfied.

At step 735, the CPU 41 checks whether or not the stroke ST is the sum of the stroke STO, the foregoing wear amount X, and a predetermined distance Y. It is to be noted that the stroke STO is a stroke which appears as explained with reference to FIG. 4 (A) when the clutch is disengaged during normal vehicle running. The distance Y appears between the abutting portion 24b of the pressure plate 24 and the stopper portion 22d of the clutch cover 22 when the clutch 20 is disengaged during normal vehicle running condition.

In the present embodiment, the stroke of the rod 31 (i.e. the detected stroke by the stroke sensor 37) and the moving distance of each of the outer peripheries of the respective pressure plate 24 and the diaphragm spring 25 are made to be equal. However, if these factors are in proportional relation at a specific rates, the right side of the formula in step 735 becomes STO ky·Y + kx·X (kx, ky: constant). When the stroke ST equals to STO + ky·Y, the abutting portion 24b of the pressure plate 24 abuts with the portion 22d of the clutch cover 22 and when the stroke ST comes to be ST0 + ky·Y + kx·X, the distance between the outer circumstance of the diaphragm 25 and the adjust wedge member 29 at a side of the diaphragm 25 becomes equal to the wear amount X.

At the instant stage, the clutch 20 in normal disengaged condition, which makes the stroke ST equal STO, which causes the CPU41 to indicate that the result of step 735 is 'NO'. Then, at step 740, the current value IM of the DC motor 32 is made to be the adjusting current IMADJ, which causes the stroke ST to reach the judged value (STO + X + Y ) gradually. Thereafter, the program goes to step 795 for its temporal termination.

Thereafter, due to the fact that the CPU 41 executes this routine or program every time a predetermined time duration elapses, the conditions for the adjust operation are monitored at steps 715 to 730 inclusive and the check is made at step 735 whether or not the stroke ST becomes the judged value (STO + X + Y ).

Thereafter, a time duration elapses, the diaphragm spring 25 makes a position or attitude change from the illustrated condition in FIG.4(A) to the illustrated condition in FIG.4(B). In detail, the diaphragm spring 25 is applied at its portion 26a with the force which is directed in the flywheel 21, which causes the diaphragm spring 25 to rotate about the ring members 25b and 25c, thereby engaging the abutting portion 24b of the pressure plate 24 with the portion 22d of the clutch cover 22.

At this time, due to the fact that the stroke ST is (STO + Y) which is smaller than the judged value, the CPU 41 indicates that the result of step 735 is 'NO' and the program goes to step 740. Thus, the DC motor 32 is applied with the current whose magnitude is the value of the current value IMADJ in continual mode, which causes the diaphragm 25 to change its position or attitude furthermore. At this time, due to the fact that the abutting portion 24b of the pressure plate 24 is engaged with the portion 22d of the clutch cover 22, a further movement of the pressure plate 24 is regulated. Thus, the distance between the outer peripheral end of the diaphragm spring 25 and the taper portion 24d of the pressure plate 24 becomes larger, which causes the adjust wedge member 29 under biasing of the coil spring CS to rotate, thereby engaging the taper portion 24d and the wedge side taper portion 29a at respective higher portions thereof, resulting in that the flat portion of the adjust wedge portion 29 follows the movement of the outer periphery of the diaphragm spring 25.

And, after elapse of time duration, if the stroke ST becomes equal to the judged value (STO + X + Y), the CPU 41 indicates that the result of step 735 is 'YES' and the program goes to step 745. At step 745, the CPU 41 sets the value of the adjust operation request flag FADJ to '0'. Also, due to the fact that at this stage, the adjust operation terminates, at step 755, the CPU 41 sets the value of the counter N to '0' for updating new adjust reference position AKI and the program goes to step 795 for terminating the routine temporally. Thereafter, the DC motor 32 is applied with the current which depends on the respective driving conditions for making the clutch control as much as preferable.

In the foregoing operation, the distance between the diaphragm spring 25 and the pressure plate 24 is increased by a degree which is equivalent with the wear amount X. Thus, the position of the diaphragm spring 25 when the clutch disc 23 becomes fully engaging condition can be returned to the initial position ( which is set under no wear condition of the clutch disc 23 when the clutch disc 23 is new ) which makes it possible to decrease the load change upon clutch control.

Next, while the routine or program illustrated in FIG.7 is executed, if any one of the results of the respective steps 715 to 730 inclusive is false which denotes the corresponding condition for the adjust operation is not satisfied, the program goes to step 795 for terminating the program temporally. In this case, the DC motor 32 is applied with the current which depends on the respective driving conditions for making the clutch control as much as preferable.

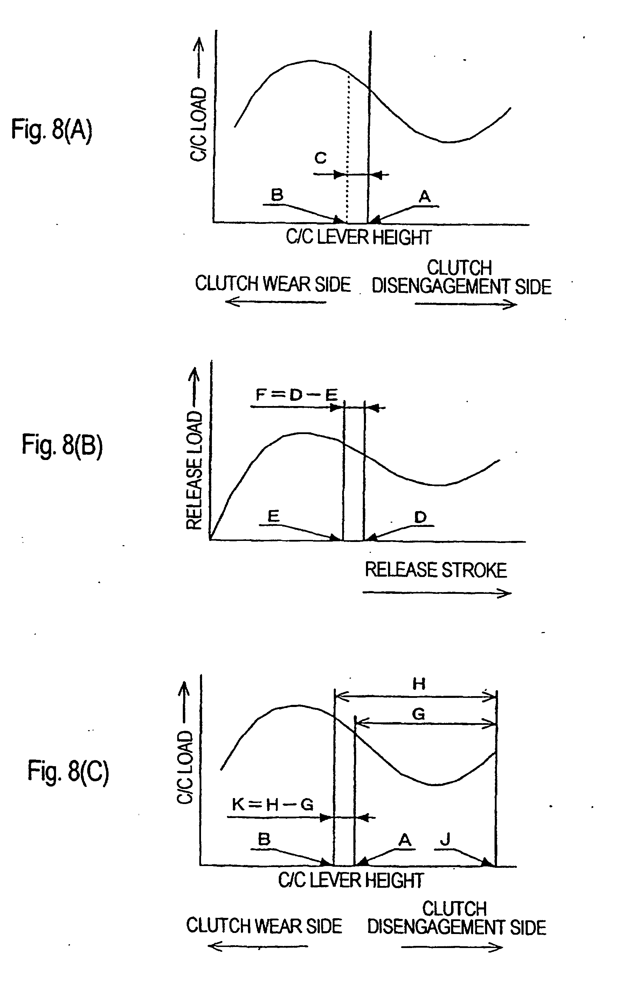

In the present embodiment, the wear amount X is calculated as the difference (distance C in FIG.8(A))between the adjust reference position AKI (point A in FIG.8(A)) and the fully engaging position KKI (point B in FIG.8(A)). However, instead, other methods can be employed. In detail, as shown in FIG.8(B), detecting the variable quantity F in direct fashion is available which is a transfer of the engaging point of the clutch disc 23 from the initial position D to the position E as a result of wear. Also, as can be seen from FIG. 8(C), the difference K is available which is the difference between the stroke G and the stroke H. The stroke G is a displacement between the initial fully engaging point A when no wear is found or the adjust operation has been just finished and a point J which is fixed arbitrary on the stroke of the clutch cover 22. The stroke H is a displacement between the fully engaging point B and the position J.

### [SECOND EMBODIMENT]

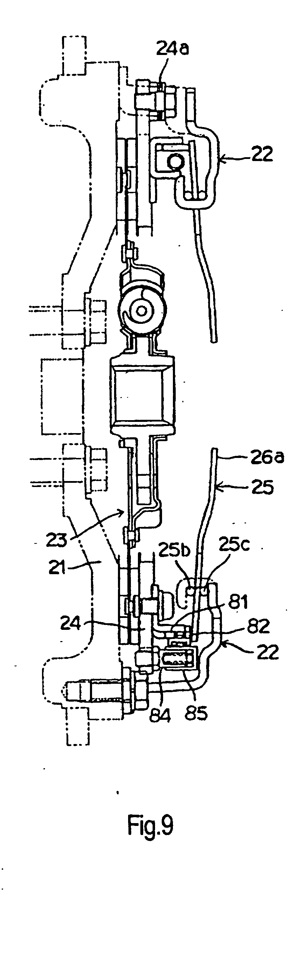

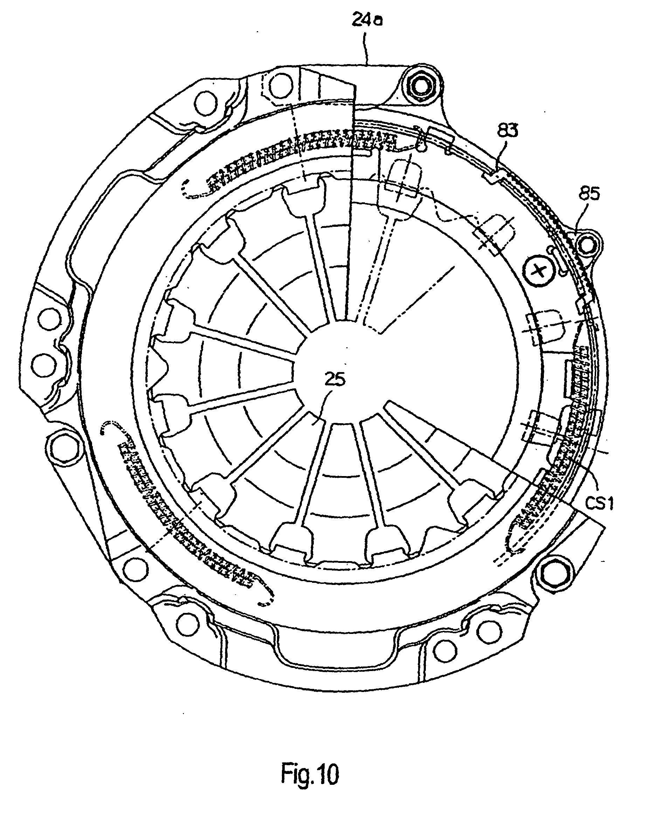

Hereinafter, a clutch control device in accordance with a second embodiment of the present invention will be detailed with reference to FIGs.9 to 16 inclusive. The clutch control device of the second embodiment differs from the clutch control device of the first embodiment in the adjusting mechanism (adjusting member) provided between the outer periphery of the pressure plate 24 and the outer periphery of the diaphragm spring 25. In the second embodiment, the same parts are designated by same or equivalent parts in the first embodiment and are not explained.

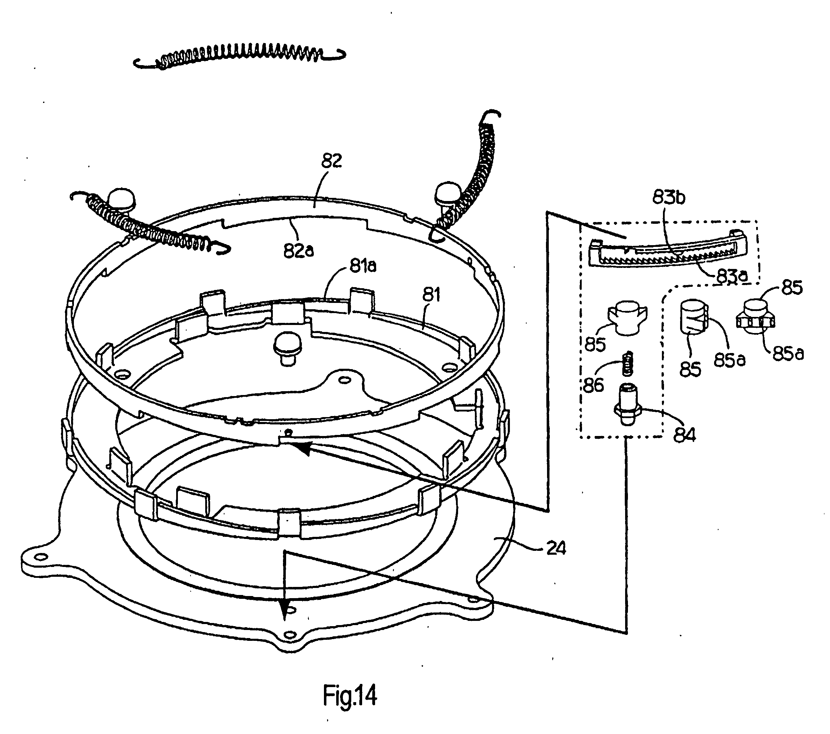

In the second embodiment, a ring-shaped serration 81 is fixed to the outer periphery of the pressure plate 24 and a plurality of serration portions 81a of the ring-shaped serration 81 are oriented to the diaphragm spring 25 (FIG.14). In addition, between the serration portion 81a and the outer periphery of the diaphragm spring 25, there is interposed an adjusting wedge member 82 as a portion of the adjusting member. This adjusting wedge member 82 is of a ring-shaped structure similar to the ring-shaped serration 81 and has a plurality of serration portions 82a. The serration portions 81a and the of serration portions 82a are in contact with each other at a plane TP1. A portion of the adjusting wedge member 82 at the side of the diaphragm spring 25 is flattened.

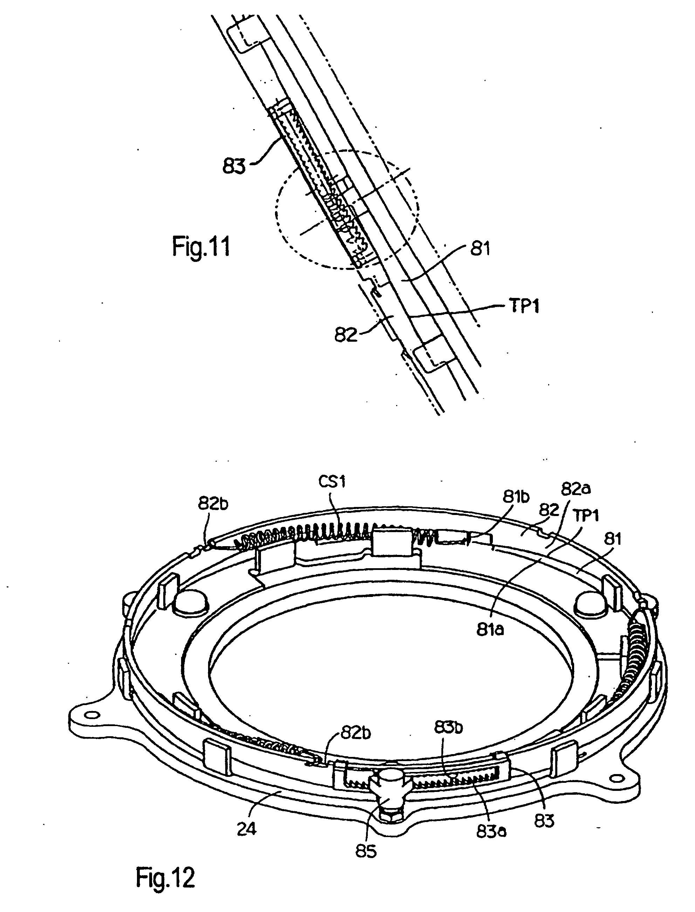

As best shown in FIG.12, at a suitable portion of the adjusting wedge member 82 at the side of the diaphragm spring 25, there is formed a notch 82b. At a suitable portion of the ring-shaped serration 81 fixed to pressure plate 24, there is formed a hook portion 81b. Between the hook portion 81b and the notch 82b, there is provided a tension spring CS1. Thus, the pressure plate 24 (ring-shaped serration 81) and adjusting wedge member 82 are urged so as to generate a relative rotation therebetween under which a top of each of the serration portions 81a and a top of the corresponding serration portion 82a approach each other.

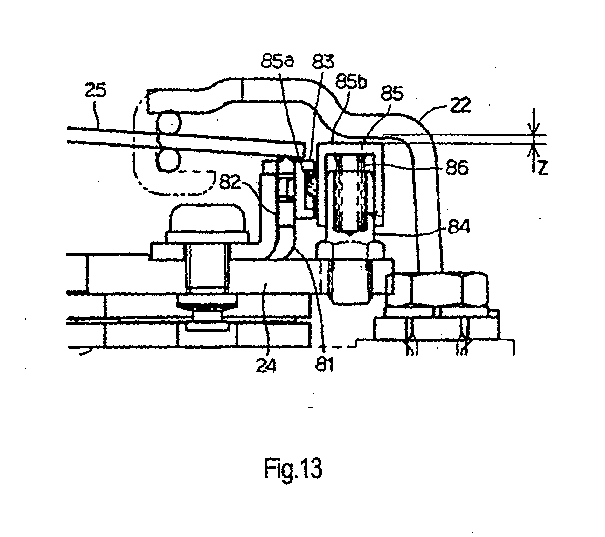

As best shown in FIGs.13 and 14, at an outer peripheral side of the adjusting wedge member 82, an adjusting rack 83 is assembled in fixing fashion. The adjusting rack 83 has a first serration 83a (which is replaceable with a plurality of equally spaced triangle teeth) or and a second serration 83b. The first serration 83a is arranged along the circumferential direction of the adjusting wedge member 82 and is extended from the side of the pressure plate 24 toward the diaphragm spring 25. The second serration 83b is opposed to the first serration 83a such that there is a phase difference of a half pitch therebetween.

At a suitable portion of the pressure plate 24, there is fixed a top-opened cylinder member 84 in which a bottom-opened hollow member 85 is supported in slidable fashion. A coil spring 86 is disposed between the top-opened cylinder member 84 and an adjusting pinion 85. Between the first serration 83a and the second serration 83b, there is placed a gear 85a which is secured to a side of the adjusting pinion 85 so as to form a meshing engagement of the gear 85a with each of the first serration 83a and the second serration 83b.

In operation, in normal driving mode of the vehicle, similar to the first embodiment, when the actuator retracts the rod (both are not shown), the center portion of the diaphragm spring 25 is moved away from the flywheel 21. At this time, the diaphragm spring 25 is brought into rotation about the ring members 25b and 25c (i.e. the diaphragm spring 25 changes its position or attitude), thereby urging the adjusting wedge member 82 toward the flywheel 21. Thus, the pressure plate 24 receives a force in the direction of the flywheel 21 by way of the ring-shaped serration 81, which results in that the clutch disc 23 is held between the pressure plate 24 and the flywheel 21. Then, the clutch disc 23 rotates together with the flywheel 21, thereby transmitting an output of the engine 10 to the transmission 11.

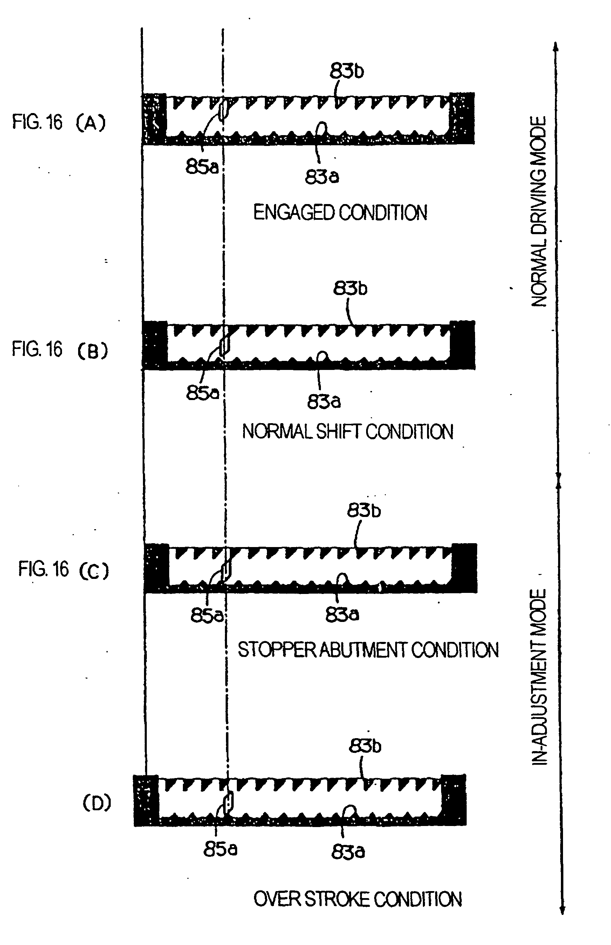

Under the clutch engaged condition during normal driving mode of the vehicle, as shown in FIG .13, an interference is prevented between the upper side 85b of the adjusting pinion 85 and the clutch cover 22. Thus, as illustrated in FIG.16(A) in conceptual fashion, the meshing engagement between the gear 85a of the adjusting pinion 85 and the second serration 83b of the adjusting rack 83 remains unchanged, the adjusting wedge member 82 fails to rotate from the pressure plate 24.

Next, an explanation will be made when the clutch is disengaged under which the output of the engine 10 is not transmitted to the transmission 11. In this case, the DC motor (not shown) is turned on to advance the rod, thereby urging the release bearing (not shown) toward the flywheel 21.

The diaphragm spring 25 receives at its center portion or the portion 26a a force in the direction of the flywheel 21, thereby being rotated about the ring members 25b and 25c. Thus, the outer periphery of the diaphragm 25 is moved away from the flywheel 21, the force which is applied to the pressure plate 24 toward the flywheel 21 by way of the adjusting wedge member 82 is reduced. On the other hand, the pressure plate 24 is connected to the clutch cover 22 by the strap 24a and is continually urged away from the flywheel 21. Thus, such a urging force moves the pressure plate 24 slightly away from the clutch disc 23, which makes the clutch disc 23 free, resulting in that the output of the engine 10 is not transmitted to the transmission 11.

Under the clutch disengaged condition during normal driving mode of the vehicle, the stroke of the actuator rod is controlled in such a manner that the upper side 85b of the adjusting pinion 85 is in engagement with the clutch cover 22 and the spring 86 is slightly compressed. Thus, as shown in FIG.16(B) in conceptual fashion, the meshing engagement between the gear 85 of the adjust pinion 85 and the second serration 83b of the adjusting rack 83 is maintained, thereby preventing a rotation of the adjusting wedge member 82 relative to the pressure plate 24. In other words, the stroke of the actuator rod is controlled at an extent so that the meshing engagement is not released between the gear 85a of the adjusting pinion 85 and the second serration 83b of the adjusting rack 83.

It is to be noted that under the clutch disengaged condition during normal driving mode of the vehicle the rod of the actuator can be controlled to maintain a slight gap Z between the upper side 85b of the adjusting pinion 85 and the clutch cover 22 as shown in FIG.13. In such a case, no sliding engagement is made between the adjusting pinion 85 and the cylinder member 84, which makes it possible to reduce a wear resulting from the friction therebetween.

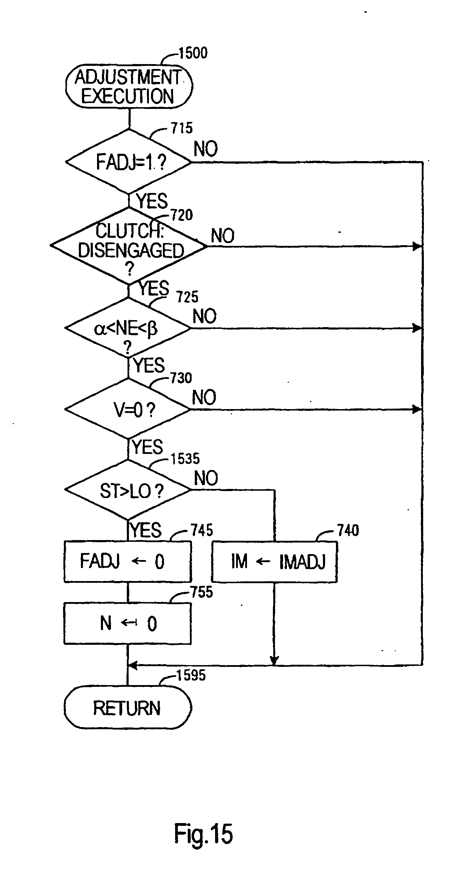

Next, an operation together with the adjust operation will be made with reference to FIG.15 which is an alternative of FIG. 7. The routine or program shown in FIG.15 differs from that shown in FIG.7 in that step 735 in FIG.7 is replaced with step 1535. Thus, steps in FIG.15 other than step 1535 are not explained. It is to be noted that in the second embodiment the routine or program shown in FIG. 6 is executed ever time when a predetermined time duration elapses and thereby the flag FIG and the adjust operation request flag FADJ are manipulated.

In the second embodiment, when all conditions are satisfied for the permitting an initiation of the adjust operation i.e. when the CPU 41 indicates that all results of steps 715 to 730 inclusive are 'YES', the program goes to step 1535. At step 1535, the CPU 41 checks whether or not the rod stroke ST becomes larger than a threshold value L0.

Due to the fact that the threshold value L0 is set to be enough larger than the rod stroke under clutch disengaged condition during vehicle normal driving mode, if the program reaches step 1535 after complying with checks at steps 715 to 730 inclusive, the stroke ST is smaller than the threshold value L0. Thus, the CPU 41 indicates that the result of step 1535 is 'NO'. Then, at step 740, the CPU 41 sets the current IM which is to be applied to the DC motor 32 to the predetermined current IMADJ whose magnitude is enough larger and the program goes to step 1595 for the temporal termination of the program.

Thereafter, every time the predetermined time duration elapses, steps 715 to 730 inclusive and step 1535 are executed in repetition fashion to check whether or not the adjust operation initiation permission conditions are satisfied and whether or not the stroke ST becomes larger than the threshold value L0. If one of the adjust operation initiation permission conditions becomes unsatisfied before the stroke ST reaches the threshold value L0 i.e. if the CPU 41 indicates that the result of one of steps 715 to 730 inclusive is 'NO', the program goes to step 1595 for terminating the program. Thereafter, currents are applied to the DC motor 32 depending on the conditions for executing suitable clutch controls.

On the other hand, so long as satisfactions of all the adjust operation initiation permission conditions continues, the magnitude of the current applied to the DC motor 32 is maintained at the value IMADJ. Thus, the diaphragm spring 25 continues to changing its attitude or position and after a time duration the upper side 85b of the adjusting pinion 85 comes to be engaged with the clutch cover 22. Thereafter, a further movement of the adjusting pinion 85 is regulated. However, the pressure plate 24 continues to move against the urging force of the spring 86 due to the fact that the pressure plate 24 is urged away from the flywheel 21 by the strap 24a disposed between the pressure plate 24 and then clutch cover 22.

As a result, a relative displacement begins between the adjusting rack 83 and the adjusting pinion 85 and if such a relative displacement becomes in excess of a predetermined value, as shown in FIG.16(C), the meshing engagement between the gear 85a of the adjusting pinion 85 and the second serration 83b is released. Then, the adjusting wedge member 82 which is under biasing of the coil spring CS1 rotates relative to the pressure plate 24 (ring member 81). However, under such a condition, due to the fact that the gear 85a of the adjusting pinion 85 is capable of being engaged with the first serration 83a, the rotation of the adjusting wedge member 82 comes to be restricted immediately upon engagement of the gear 85a of the adjusting pinion 85 with the first serration 83a. The aforementioned operation moves the engaged position at which the serration portion 81a and the serration portion 82a by a half pitch of the serration 83a (83b).

Then, after an elapse of time duration, if the stroke ST becomes larger than the threshold value L0, the CPU 41 indicates that the result of step 1535 is 'YES'. Subsequently, the CPU 41 manipulates the flag FADJ and the counter N at steps 745 and 755, respectively. Thereafter, when the clutch disc 23 is returned to its normal or ordinal disengaging position as a result of execution of a program (not shown), the relative change between the adjusting rack 83 and the adjusting pinion 85 is returned to normal condition. Thus, due to the fact that the spring 86 releases the meshing engagement between the gear 85a of the adjusting pinion 85 and the first serration 83a, the coil spring CS1 rotates the adjusting wedge member 82 again relative to the pressure plate 24 (serration 81). Due to the fact that such a rotation comes to be restricted immediately upon engagement of the gear 85a of the adjusting pinion 85 with the second serration 83b, the engaged position at which the serration portion 81a and the serration portion 82a is further moved by a half pitch of the serration 83a (83b). Thus, the attitude or position of the diaphragm spring 25 is adjusted or corrected when the vehicle is in normal driving mode.

As explained above, in the second embodiment, when the wear amount of the clutch disc becomes in excess of a set value and a condition is detected in which the occurrence possibility of an erroneous adjustment is little even if the adjust operation is made (e.g. driving condition causing no resonant of the clutch cover), a singe adjust operation makes wear compensation by a value which corresponds to one pitch of the second serration 83b (the height displacement of the serration portion 81a when one pitch advance of the serration portion 81a). In addition, in the second embodiment, the meshing engagement between the first serration 83a and each of the second serration 83b and the gear 85a regulates the adjusting wedge member 82 to rotate, which makes the adjusting amount unchanged while the vehicle normal driving mode, resulting in that engaging and disengaging clutch can be made in such a manner that the friction wear compensation is always established properly. Moreover, in the second embodiment, due to the fact that the threshold value L0 is capable of being determined independent of the wear amount, the friction wear compensation can be made with excellent precision.

It is to be noted that in the second embodiment the distance between the outer periphery of the diaphragm spring 25 and the pressure plate 24 which is to be compensated (i.e. changed) by one adjust operation is, preferably, set to be smaller than and in a vicinity of the wear amount judging value L. This makes it possible to achieve the friction wear compensation which is required when the single adjust operation is made.

### [EPILOUGUE]

As apparent from the foregoing detailed explanations, the clutch control device in accordance with the present invention, the adjust operation can be made at an arbitrary time when the vehicle vibration affects little the clutch cover and other elements, which makes it possible to doing friction wear compensation with very precise excellent precise.

Needless to say, within the scope of the concept of the present invention, various modifications can be made. For example, instead of the actuator 30 which is driven by the DC motor 32, a hydraulic actuator can be employed which moves the rod 31 by controlling hydraulic pressure with the usage of an electromagnetic valve. In addition, though in the foregoing both embodiments, the adjust operation is made in such a manner that only when the possibility of resonant of the clutch cover with the vehicle vibration is little the actuator is made to operate for changing or correcting the attitude of the diaphragm spring 25, the adjust operation can be initiated when other condition is satisfied. Moreover, the clutch control device 40 can be either integrated with or separated from the actuator 30.

The invention has thus been shown and description with reference to specific embodiments, however, it should be understood that the invention is in no way limited to the details of the illustrates structures but changes and modifications may be made without departing from the scope of the appended claims.

The present invention provides a clutch control device which is capable of compensating the wear of a clutch disc precisely. The clutch control device includes clutch disc 23, a pressure plate 24 which urges the clutch disc 23, a diaphragm spring 25 which urges the pressure plate 24 toward the flywheel 21, a release bearing 26 which urges a central portion of the diaphragm spring 25, a release fork 27, and an actuator 30. Outer peripheries of the respective flywheel 21 and the diaphragm spring 25 are engaged with each other by way of a tapered portion 24d of the pressure plate 24 and an adjust wedge member 29. Only when a vehicle body vibration, the central portion of the diaphragm spring 25 urged largely toward the flywheel 21, which causes the adjust wedge member 29 to rotate, thereby adjusting the distance between the outer peripheries of the respective flywheel 21 and the diaphragm spring 25.

## Claims

1. A clutch comprising a pressure plate (24), a spring (25) and a clutch control device which moves a clutch disc (23) by way of the pressure plate (24) and the spring (25) so as to engage with and disengage from a wheel (21) opposed thereto and rotating together with an output shaft of a driving source, in order to adjust an engagement relationship between the wheel (21) and the clutch disc (23), the clutch control device comprising:
an actuator (30) providing a force to the spring (25) which serves for adjusting the engagement relationship;
an adjusting member (82; 83; 85); and
a controller (60) for controlling the actuator (30) such that only when a condition is satisfied the adjusting member (82; 83; 85) makes an adjustment of the distance between the spring (25) and the pressure plate (24),
**characterized in that**
the adjusting member (82; 83; 85) is disposed between the pressure plate (24) and the spring (25) for establishing a force transmission path therebetween and making it possible to change a distance between the spring (25) and the pressure plate (24).

2. A clutch as set forth in Claim 1 further comprising means for measuring a wear amount of the clutch disc (23), wherein when the wear amount of the clutch disc (23) is found to be in excess of a predetermined value the condition is regarded as being satisfied.

3. A clutch as set forth in Claim 1 or Claim 2 further comprising means for measuring a vehicle speed, wherein when the vehicle speed is substantially 0 the condition is regarded as being satisfied.

4. A clutch as set forth in Claim 3 further comprising means for measuring the rotation number of the output shaft of the driving source, wherein when the rotation number of the output shaft is found to be in excess of a predetermined rotation number the condition is regarded as being satisfied.

5. A clutch as set forth in Claim 1 to Claim 4, wherein the moving distance of the pressure plate (24) when the pressure plate (24) away from the wheel (21) is restricted by a clutch cover (22) fixed to the wheel (21) so that the adjusting member (82; 83; 85) is allowed to adjust the distance between the spring (25) and the pressure plate (24).

6. A clutch as set forth in Claim 1 to Claim 4, wherein the adjusting member (82; 83; 85) is allowed to adjust the distance between the spring (25) and the pressure plate (24) when the force provided from the actuator (30) to the spring (25) is found to be in excess of a predetermined value.

7. A clutch as set forth in Claim 6, wherein the actuator (30) has a motor, a gear engaged with an output shaft of the motor, and a rod connecting between the gear and the spring (25) by way of a release fork (27) and a release bearing (26), the force directed to disengage the clutch disc (23) away from the wheel (21) which is generated by the motor so as to apply to the spring (25) is found to be in excess of a predetermined force when a condition is satisfied.

## Patentansprüche

1. Kupplung mit einer Druckplatte (24), einer Feder (25) und einer Kupplungssteuervorrichtung, die eine Kupplungsscheibe (23) mittels der Druckplatte (24) und der Feder (25) so bewegt, um mit einem dazu gegenüberliegenden und zusammen mit einer Abtriebswelle einer Antriebsquelle drehenden Rad (21) in Eingriff zu sein und nicht von diesem gelöst zu sein, damit eine eingreifende Beziehung zwischen dem Rad (21) und der Kupplungsscheibe (23) eingestellt wird, wobei die Kupplungssteuervorrichtung umfasst:
einen eine Kraft zu der Feder (25) bereit stellenden Aktuator (30), der zum Einstellen der Eingreifbeziehung dient;
ein Einstellteil (82; 83; 85); und
eine Steuerung (60), um den Aktuator (30) so zu steuern, dass das Einstellteil (82; 83; 85) nur dann eine Einstellung des Abstands zwischen der Feder (25) und der Druckplatte (24) durchführt, wenn eine Bedingung erfüllt ist,
**dadurch gekennzeichnet, dass**
das Einstellteil (82; 83; 85) zwischen der Druckplatte (24) und der Feder (25) vorgesehen ist, um dazwischen einen Kraftübertragungsweg einzuführen, und es möglich macht, einen Abstand zwischen der Feder (25) und der Druckplatte (24) zu ändern.

2. Kupplung gemäß Anspruch 1, außerdem mit einer Einrichtung zum Messen eines Verschleißausmaßes der Kupplungsscheibe (23), wobei die Bedingung als erfüllt betrachtet wird, wenn das Verschleißausmaß der Kupplungsscheibe (23) als einen vorbestimmten Wert überschreitend ermittelt wird.

3. Kupplung gemäß Anspruch 1 oder 2, außerdem mit einer Einrichtung zum Messen einer Fahrzeuggeschwindigkeit, wobei die Bedingung als erfüllt betrachtet wird, wenn die Fahrzeuggeschwindigkeit im Wesentlichen 0 beträgt.

4. Kupplung gemäß Anspruch 3, außerdem mit einer Einrichtung zum Messen der Drehzahl der Abtriebswelle der Antriebsquelle, wobei die Bedingung als erfüllt betrachtet wird, wenn die Drehzahl der Abtriebswelle als eine vorbestimmte Drehzahl überschreitend ermittelt wird.

5. Kupplung gemäß Anspruch 1 bis 4, wobei der Bewegungsabstand der Druckplatte (24) durch eine an dem Rad (21) so befestigte Kupplungsabdeckung (22) beschränkt ist, dass dem Einstellteil (82; 83; 85) gestattet ist, den Abstand zwischen der Feder (25) und der Druckplatte (24) einzustellen, wenn die Druckplatte (24) von dem Rad (21) entfernt ist.

6. Kupplung gemäß Anspruch 1 bis 4, wobei dem Einstellteil (82; 83; 85) gestattet ist, den Abstand zwischen der Feder (25) und der Druckplatte (24) einzustellen, wenn die von dem Aktuator (30) zu der Feder (25) bereit gestellte Kraft als eine einen vorbestimmten Wert überschreitend ermittelt wird.

7. Kupplung gemäß Anspruch 6, wobei der Aktuator (30) einen Motor, ein mit einer Abtriebswelle des Motors in Eingriff befindliches Zahnrad und eine zwischen dem Zahnrad und der Feder (25) mittels einer Lösungsgabel (27) und einem Lösungslager (26) verbindenden Stange aufweist, wobei die zum Lösen der Kupplungsscheibe (23) von dem Rad (21) entfernt gerichtete Kraft, die durch den Motor erzeugt wird, um auf die Feder (25) zu wirken, als eine vorbestimmte Kraft überschreitend ermittelt wird, wenn eine Bedingung erfüllt ist.

## Revendications

1. Embrayage comprenant un plateau de pression (24), un ressort (25) et un dispositif de commande d'embrayage qui déplace un disque d'embrayage (23) au moyen du plateau de pression (24) et du ressort (25), de manière à se mettre en prise avec et hors de prise d'une roue (21) qui y est opposée et tournant en même temps qu'un arbre de sortie d'une source d'entraînement, afin de régler une relation de mise en prise entre la roue (21) et le disque d'embrayage (23), le dispositif de commande d'embrayage comprenant :
un actionneur (30) fournissant une force au ressort (25) qui sert à régler la relation de mise en prise ;
un élément de réglage (82 ; 83 ; 85) ; et
un dispositif de commande (60) pour commander l'actionneur (30), de sorte que, l'élément de réglage (82 ; 83 ; 85) effectue un réglage de la distance entre le ressort (25) et le plateau de pression (24) uniquement lorsqu'une condition est satisfaite,
**caractérisé en ce que**
l'élément de réglage (82 ; 83 ; 85) est disposé entre le plateau de pression (24) et le ressort (25) pour établir entre eux un trajet de transmission de force et permettre à ce qu'il soit possible de changer une distance entre le ressort (25) et le plateau de pression (24).

2. Embrayage selon la revendication 1, comprenant en outre des moyens pour mesurer une intensité de l'usure du disque d'embrayage (23), dans lequel, lorsque l'on trouve que l'intensité de l'usure du disque d'embrayage (23) excède une valeur prédéterminée, il est considéré que la condition est satisfaite.

3. Embrayage selon la revendication 1 ou 2, comprenant en outre des moyens pour mesurer une vitesse du véhicule, dans lequel, lorsque la vitesse du véhicule est sensiblement égale à 0, il est considéré que la condition est satisfaite.

4. Embrayage selon la revendication 3, comprenant en outre des moyens pour mesurer le nombre de rotations de l'arbre de sortie de la source d'entraînement, dans lequel, lorsque l'on trouve que le nombre de rotations de l'arbre de sortie est supérieur à un nombre de rotations prédéterminé, il est considéré que la condition est satisfaite.

5. Embrayage selon la revendication 1 à 4, dans lequel la distance de déplacement du plateau de pression (24), lorsque le plateau de pression (24) est loin de la roue (21), est restreinte par un couvercle d'embrayage (22) fixé à la roue (21), de sorte que l'élément de réglage (82 ; 83 ; 85) peut régler la distance entre le ressort (25) et le plateau de pression (24).

6. Embrayage selon la revendication 1 à 4, dans lequel l'élément de réglage (82 ; 83 ; 85) peut régler la distance entre le ressort (25) et le plateau de pression (24) lorsque l'on trouve que la force fournie depuis l'actionneur (30) au ressort (25) est supérieure à une valeur prédéterminée.

7. Embrayage selon la revendication 6, dans lequel l'actionneur (30) comporte un moteur, un pignon en prise avec un arbre de sortie du moteur, et une tige de liaison entre le pignon et le ressort (25) au moyen d'une fourchette de débrayage (27) et une butée de débrayage (26), la force orientée pour mettre hors de prise le disque d'embrayage (23) en l'éloignant de la roue (21), laquelle est générée par le moteur de manière à s'appliquer au ressort (25), est trouvée supérieure à une force prédéterminée lorsqu'une condition est satisfaite.
